# EUROPEAN PATENT APPLICATION

(11) **EP 2 063 561 A1**
(43) Date of publication of application: **27.05.2009**
(21) Application number: 07829231.5
(22) Date of filing: 04.10.2007
(51) Int. Cl.: H04J 11/00, H04J 1/00, H04J 15/00, H04Q 7/36

(54) **RADIO COMMUNICATION DEVICE, RADIO COMMUNICATION SYSTEM, RADIO COMMUNICATION METHOD, REPORT INFORMATION TRANSMISSION METHOD, AND SCHEDULING METHOD**

(30) Priority: 05.10.2006 JP 2006274184
(71) Applicant: Sharp Kabushiki Kaisha, Osaka-shi, Osaka 545-8522 (JP)
(72) Inventor: ONODERA, Takashi, Chiba-ken (JP); NOGAMI, Toshizo, Chiba-ken (JP)
(74) Representative: Müller - Hoffmann & Partner
(86) International application number: PCT/JP2007/069493
(87) International publication number: WO 2008/041752

(57) **Abstract**

A wireless communication device receives signals using a channel allocated from N channels to the wireless communication device by another wireless communication device. The wireless communication device includes: a storage that stores information concerning at least newest (M-K) request channels among M request channels that are candidates to be allocated; an additional channel selector that selects K additional channels to be newly added to request channels from the N channels excluding the (M-K) request channels, selects at least newest (M-K) request channels from the request channels including the (M-K) request channels stored and the K additional channels selected, and stores information indicative of the (M-K) request channels selected in the storage; and a report information generator that generates report information that is to be reported to the other wireless communication device and includes information indicative of the K additional channels selected by the additional channel selector.

## Description

### TECHNICAL FIELD

The present invention relates to a wireless communication device, a wireless communication system, a wireless communication method, a report information transmitting method, and a scheduling method. Particularly, the present invention relates to a wireless communication device, a wireless communication system, a wireless communication method, a report information transmitting method, and a scheduling method for transmitting and receiving data using a channel allocated from multiple channels based on information indicated in reverse link.
Priority is claimed on Japanese Patent Application No. 2006-274184, filed October 5, 2006, the content of which is incorporated herein by reference.

### BACKGROUND ART

Currently, demand for data communication is increasing in mobile communication systems. Various technologies achieving high frequency utilization efficiency have been proposed with the increase in data communication.
One of the technologies capable of enhancing frequency utilization efficiency is OFDMA (Orthogonal Frequency Division Multiple Access) in which a common frequency is used for communication in all cells included in a communication area, a modulation scheme for communication is OFDM (Orthogonal Frequency Division Multiplexing), and an access scheme is TDMA (Time Division Multiple Access) or FDMA (Frequency Division Multiple Access). OFDMA is a communication scheme achieving faster data communication while a common radio interface is used in both an isolated cell and a cell area.

In HSDPA (High Speed Downlink Packet Access) of a W-CDMA (Wideband-Code Division Multiple Access) mobile communication system, a scheduling method for an OFDMA system has been proposed in which a communication terminal device indicates a CQI (Channel Quality Indicator) for every subcarrier indicative of a downlink channel condition to a base station device so that the base station device performs packet scheduling based on the CQI for every subcarrier indicated by each communication terminal device (see, for example, Non-patent Document 1).
Similarly, an invention is disclosed in which each communication terminal device evaluates each downlink channel condition (frequency characteristics) upon scheduling of transmission data in an OFDMA system using multiple subcarriers and indicates the channel condition that is quantized to a base station device using an uplink feedback channel so that the base station device determines subcarriers to be allocated to each communication terminal device based on the indicated information (see, for example, Patent Document 1).

As a channel quality feedback method for an OFDMA system, a method has been proposed in which a receiver selects multiple subcarriers having high channel qualities and indicates information indicative of the subcarriers and an averaged value of the channel qualities of the subcarriers to a transmitter so that the amount of feedback information is reduced to prevent overhead in reverse link from a communication terminal device to a base station device (see, for example, Patent Document 2).
Additionally, another method for an OFDM system has been proposed in which a receiver specifies carriers having bad channel qualities and indicates frequency information concerning the specified carriers or the numbers for identifying the specified carriers to a base station so that the carriers having the bad channel qualities are not used (see, for example, Patent Documents 3 and 4).
Patent Document 1: Japanese Unexamined Patent Application, First Publication No. 2005-130491
Patent Document 2: Japanese Unexamined Patent Application, First Publication No. 2004-208234
Patent Document 3: Japanese Unexamined Patent Application, First Publication No. 2001-148682
Patent Document 4: Japanese Unexamined Patent Application, First Publication No. 2004-147068
Non-patent Document 1: "Comments on frequency scheduling and joint power and rate optimization for OFDM", 3GPP, TSG RAN WG1 Meeting #29, R-02-1321, November, 2002

### DISCLOSURE OF THE INVENTION

### Problems to be Solved by the Invention

However, the amount of identification information (the number of bits) for identifying channels is large since the number of channels is very large in broadband communication. The amount of identification information concerning the channels and channel quality indicators of the respective channels, which is fed back from the communication terminal device to the base station device, is large, thereby causing a problem on heavy data communication traffic in reverse link (uplink) from a communication terminal device to a base station device.

### Means for Solving the Problems

The present invention has been made to solve the problems. A wireless communication device of the present invention receives signals using a channel allocated from N channels to the wireless communication device by another wireless communication device. The wireless communication device includes: a storage that stores information concerning at least newest (M-K) request channels among M request channels that are candidates to be allocated; an additional channel selector that selects K additional channels to be newly added to request channels from the N channels excluding the (M-K) request channels, selects at least newest (M-K) request channels from the request channels including the (M-K) request channels stored and the K additional channels selected, and stores information indicative of the (M-K) request channels selected in the storage; and a report information generator that generates report information that is to be reported to the other wireless communication device and includes information indicative of the K additional channels selected by the additional channel selector.

Accordingly, the wireless communication device of the present invention specifies request channels that are candidates to be allocated based on information that is included in the report information and indicative of K additional channels to be newly added to the request channels. Thereby, the amount of report information can be reduced.

The wireless communication device of the present invention includes a channel quality measuring unit that measures channel qualities of the N channels based on reception signals from the other wireless communication device. The additional channel selector selects the K additional channels based on the channel qualities.

Accordingly, the wireless communication device of the present invention selects channels having good channel qualities as additional channels. Thereby, the other wireless communication device can allocate channels having good channel qualities to the wireless communication device.

In the wireless communication device of the present invention, the report information generator generates report information including information indicative of channel qualities of the K additional channels in addition to the information indicative of the K additional channels.

Accordingly, the wireless communication device of the present invention reports, as report information, channel qualities of the channels selected as the request channels to the other wireless communication device. Thereby, the other wireless communication device can preferentially allocate request channels having good channel qualities based on the reported reception qualities, thereby enhancing the transmission efficiency.

In the wireless communication device of the present invention, the additional channel selector selects K additional channels from the N channels excluding the (M-K) request channels stored in the storage, selects, from the channel qualities, channel qualities of M request channels including the (M-K) request channels stored and the K additional channels selected, selects at least newest (M-K) request channels from the M request channels, and stores information indicative of the (M-K) request channels selected in the storage. The report information generator generates report information including information indicative of the channel qualities of the M request channels selected by the additional channel selector.

Accordingly, the wireless communication device of the present invention reports, as report information, the newest channel qualities of the selected request channels to the other wireless communication device. Thereby, the other wireless communication device can preferentially allocate request channels having good channel qualities to the wireless communication device based on the channel qualities, thereby enhancing the transmission efficiency.

Additionally, a wireless communication device of the present invention receives signals using a channel allocated from N channels to the wireless communication device by another wireless communication device. The wireless communication device includes: a demultiplexer that demultiplexes, from a reception signal received from the other wireless communication device, report information including information indicative of K additional channels to be newly added to request channels that are candidates to be allocated; a buffer that extracts the information indicative of the K additional channels from the report information demultiplexed, selects newest M request channels from channels including the K additional channels indicated by the information extracted and M request channels indicated by information stored in the buffer, and stores the M request channels selected in the buffer; and a scheduler that schedules channels to be allocated to the other wireless communication device based on the M request channels selected by the buffer.

Accordingly, the wireless communication device of the present invention specifies request channels that are candidates to be allocated based on information that is included in the report information and indicative of K additional channels to be newly added to the request channels. Thereby, the amount of report information can be reduced.

In the wireless communication device of the present invention, the report information comprises information indicative of the K additional channels and channel qualities thereof. The buffer stores information indicative of the M request channels and channel qualities thereof. The buffer selects newest M request channels from channels including the K additional channels extracted from the report information and the M request channels indicated by the information stored in the buffer, stores the M request channels selected in the buffer, extracts information indicative of the channels qualities, selects information indicative of channel qualities of the M request channels selected from the information indicative of the channel qualities extracted and the information indicative of the channel qualities stored in the buffer, and stores the information selected in the buffer. The scheduler schedules channels to be allocated to the other wireless communication device based on the information indicative of the M request channels and the channel qualities thereof which are selected by the buffer.

Accordingly, the wireless communication device of the present invention stores channel qualities of respective request channels. Thereby, the other wireless communication device can preferentially allocate request channels having good channel qualities, thereby enhancing the transmission efficiency.

In the wireless communication device of the present invention, the report information comprises information indicative of the K additional channels and channel qualities of M request channels comprising the K additional channels. The buffer extracts the information indicative of the channel qualities of the M request channels including the K additional channels in addition to the information indicative of the K additional channels from the report information. The scheduler schedules channels to be allocated to the other wireless communication device based on the information indicative of the M request channels selected by the buffer and the information concerning the channel qualities which is extracted by the buffer.

Accordingly, the other wireless communication device can preferentially allocate request channels having good channel qualities to the wireless communication device based on the channel qualities, thereby enhancing the transmission efficiency.

Further, a wireless communication system of the present invention includes: a first wireless communication device and a second wireless communication device that receives reception signals using a channel allocated from N channels by the first wireless communication device. The second wireless communication device includes a storage that stores information concerning at least newest (M-K) request channels among M request channels that are candidates to be allocated; an additional channel selector that selects K additional channels to be newly added to request channels from the N channels excluding the (M-K) request channels, selects at least newest (M-K) request channels from the request channels including the (M-K) request channels stored and the K additional channels selected, and stores information indicative of the (M-K) request channels selected in the storage; and a report information generator that generates report information that is to be reported to the other wireless communication device and includes information indicative of the K additional channels selected by the additional channel selector. The first wireless communication device includes: a demultiplexer that demultiplexes the report information from a reception signal received from the second wireless communication device; a buffer that extracts the information indicative of the K additional channels from the report information demultiplexed, selects newest M request channels from channels including the K additional channels indicated by the information extracted and M request channels indicated by information stored in the buffer, and stores the M request channels selected in the buffer; and a scheduler that schedules channels to be allocated to the second wireless communication device based on the M request channels selected by the buffer.

Moreover, a wireless communication method of the present invention is provided for a wireless communication system including a first wireless communication device and a second wireless communication device that receives reception signals using a channel allocated from N channels by the first wireless communication device. The wireless communication method includes: a first step of the second wireless communication device selecting K additional channels to be newly added to request channels from the N channels excluding newest (M-K) request channels among previous M request channels that are candidates to be allocated; a second step of the second wireless communication device generating report information including information indicative of the K additional channels selected in the first step; a third step of the second wireless communication device transmitting the report information generated in the second step to the first wireless communication device; a fourth step of the first wireless communication device receiving the report information transmitted in the fourth step; a fifth step of the first wireless communication device extracting the information indicative of the K additional channels from the report information received in the fourth step, and selecting, as current request channels, newest M request channels from channels including the K additional channels indicated by the information extracted and the previous M request channels; and a sixth step of the first wireless communication device scheduling channels to be allocated to the second wireless communication device based on the M request channels selected in the fifth step.

Additionally, a wireless communication method of the present invention is provided for a wireless communication device that receives signals using a channel allocated from N channels to the wireless communication device by another wireless communication device. The wireless communication method includes: a first step of the wireless communication device selecting K additional channels to be newly added to request channels from the N channels excluding newest (M-K) request channels among previous M request channels that are candidates to be allocated; a second step of the wireless communication device generating report information including information indicative of the K additional channels selected in the first step; and a third step of the wireless communication device transmitting the report information generated in the second step to the other wireless communication device.

Further, a wireless communication method of the present invention is provided for a wireless communication device that receives signals using a channel allocated from N channels to the wireless communication device by another wireless communication device. The wireless communication method includes: a first step of the wireless communication device receiving report information transmitted from the other wireless communication device; a second step of the wireless communication device extracting information indicative of K additional channels from the report information received in the first step, and selecting, as current request channels, newest M request channels from channels including the K additional channels indicated by the information extracted and previous M request channels; and a third step of the wireless communication device scheduling channels to be allocated to the other wireless communication device based on the M request channels selected in the second step.

### Effects of the Invention

The wireless communication device of the present invention specifies request channels that are candidates to be allocated based on information that is included in the report information and indicative of K additional channels to be newly added to the request channels. Thereby, there is a merit in that a radio receiver, a radio transmitter, a wireless communication system, and a wireless communication method for reducing the amount of report information can be provided.

### BRIEF DESCRIPTION OF THE DRAWINGS

FIG. 1 is a block diagram illustrating the configuration of a base station device 100 according to a first embodiment of the present invention.
FIG. 2 is a block diagram illustrating the configuration of a terminal device 200 according to the first embodiment.
FIG. 3 is a block diagram illustrating the inner configuration of a report information generator 210 according to the first embodiment.
FIG. 4 illustrates an example of channel quality measurement results measured and output by the channel quality measuring unit 209 according to the first embodiment.
FIG. 5 illustrates an example of information concerning (M-K) request continuation channels and the order thereof which are stored in a storage 302 according to the first embodiment.
FIG. 6 is a flowchart illustrating operations performed by an additional channel selector 301 according to the first embodiment.
FIG. 7 illustrates an example of information output from the update channel selector 301 to a report information symbol generator 303 according to the first embodiment.
FIG. 8 illustrates an example of information concerning (M-K) request continuation channels and the order thereof which are updated from the state shown in FIG. 5 and stored in the storage 302 according to the first embodiment.
FIG. 9 is a block diagram illustrating the configuration of a base station device 400 according to a second embodiment of the present invention.
FIG. 10 is a block diagram illustrating the configuration of a terminal device 500 according to the second embodiment.
FIG. 11 is a block diagram illustrating the inner configuration of a report information generator 510 according to the second embodiment.
FIG. 12 is a flowchart illustrating operations performed by an additional channel selector 901 according to the second embodiment.
FIG. 13 illustrates an example of information output from the additional channel selector 901 to a report information symbol generator 903 according to the second embodiment.

### Description of Reference Numerals

- 100 and 400: base station
- 101: encoder
- 102: mapper
- 103: multiplexer
- 104: IFFT unit
- 105: GI inserter
- 106: D/A converter
- 107: radio transmitter
- 108: antenna unit
- 109: radio receiver
- 110: A/D converter
- 111: demultiplexer
- 112: demapper
- 113: decoder
- 114: scheduler
- 115: notification information generator
- 116: pilot generator
- 117 and 417: buffer
- 200 and 500: terminal device
- 201: antenna unit
- 202: radio receiver
- 203: A/D converter
- 204: GI remover
- 205: FFT unit
- 206: demultiplexer
- 207: demapper
- 208: decoder
- 209: channel quality measuring unit
- 210 and 510: report information generator
- 211: encoder
- 212: mapper
- 213: multiplexer
- 214: D/A converter
- 215: radio transmitter
- 216: demodulation controller
- 301 and 901: additional channel selector
- 302: storage
- 303 and 903: report information symbol generator

### BEST MODE FOR CARRYING OUT THE INVENTION

In the following embodiments, an indicator calculated based on a pilot symbol, such as CINR (Carrier-to-Interference plus Noise Ratio), is used as channel quality information. Other indicators indicative of channel qualities correlated with the reception signal power or the carrier power, such as RSSI (Received Signal Strength Indicator), SNR (Signal to Noise Ratio), SIR (Signal to Interference Ratio), SINR (Signal to Interference plus Noise Ratio), CNR (Carrier to Noise Ratio), or CIR (Carrier to Interference Ratio), may be used. Alternatively, a modulation parameter, such as an MCS (Modulation and Coding Scheme) or a transmission rate, may be used. Although a channel indicates one or multiple subcarriers and scheduling of multiple channels is explained in the following embodiments, the present invention is applicable not only to channels in a frequency domain, but also to a communication system using multiple channels, such as channels in a unique mode for SDMA (Space Division Multiple Access) or a combination of these channels. In other words, the present invention is applicable to a system in which channel quality might differ for each channel.

Although an OFDMA downlink from a base station device to a terminal device and a reverse link (uplink) for feedback of report information from the terminal device to the base station device are explained on the assumption of a cellular system in the following embodiments, the present invention is not limited thereto. Between two wireless communication devices, a device that reports information for identifying each channel and information concerning channel quality of each channel (device having a function of transmitting report information) is regarded as a terminal device. On the other hand, a device that allocates transmission data to each channel based on the reported channel information and the channel quality information (device having an allocation function) is regarded as a base station device. One wireless communication device can have both functions in some cases. In the description, a wireless communication device is a device that executes wireless communication and includes a base station device, a terminal device, a radio device, a mobile terminal device, a cellular phone, and the like. The present invention is applicable to wireless communication devices, any one of which can execute allocation, and another of which can transmit report information.
In the following explanations, a request channel indicates a channel that a terminal device requests to a base station device as a candidate of downlink channels to which transmission data addressed to the terminal device is allocated. An additional channel indicates a channel to be newly added as a request channel.

### [First Embodiment]

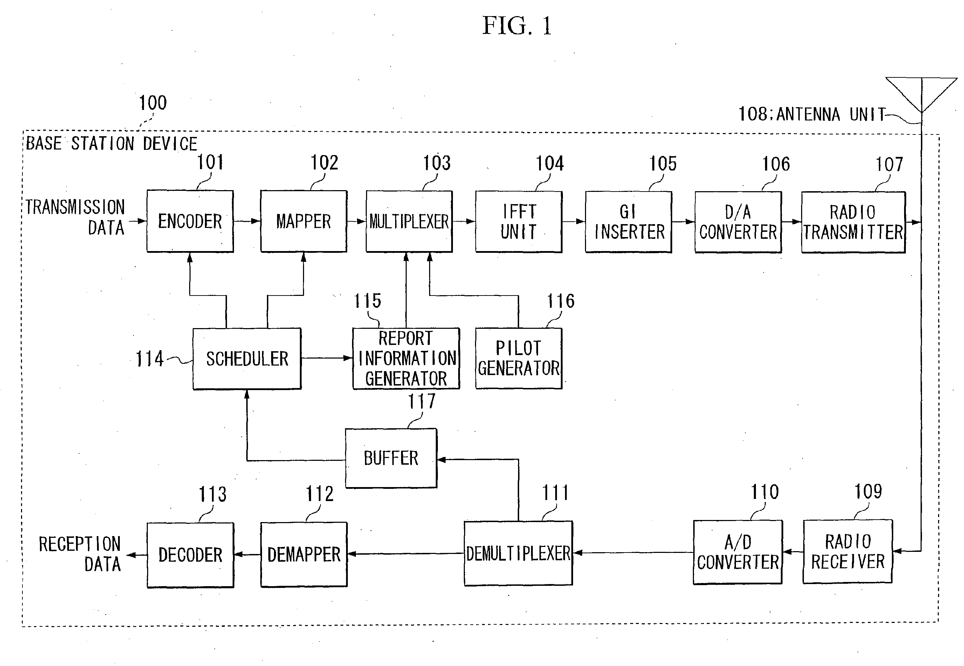

Hereinafter, a first embodiment of the present invention is explained with reference to the accompanying drawings. FIG. 1 is a schematic block diagram illustrating the configuration of a base station 100 according to the first embodiment.

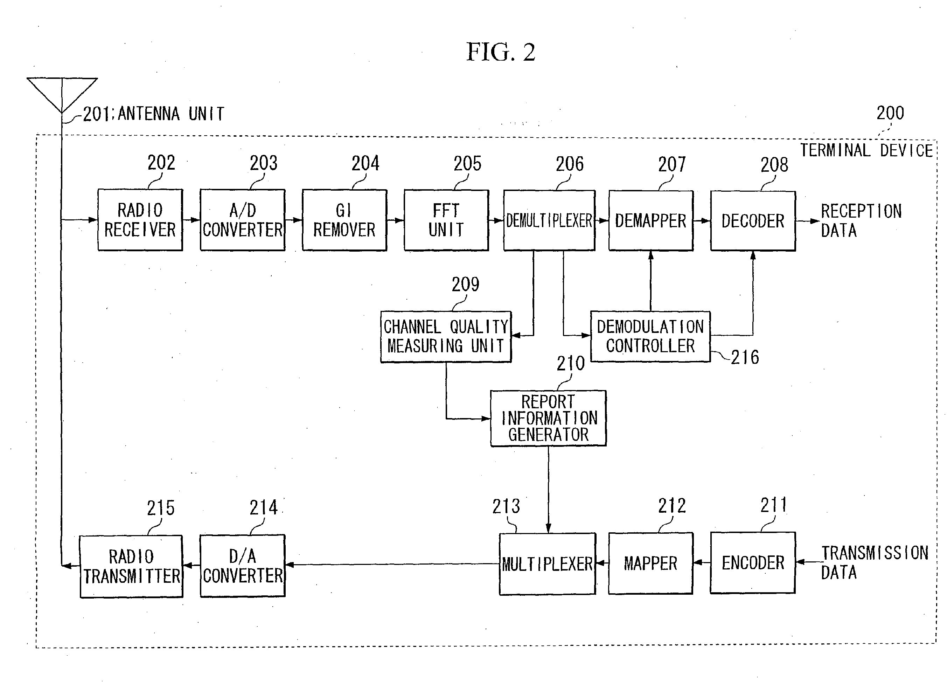

FIG. 2 is a schematic block diagram illustrating the configuration of a terminal device 200 according to the first embodiment.
The base station device 100 includes an encoder 101, a mapper 102, a multiplexer 103, an IFFT (Inverse Fast Fourier Transform) unit 104, a GI (Guard Interval) inserter 105, a D/A (Digital-to-Analog) converter 106, a radio transmitter 107, an antenna unit 108, a radio receiver 109, an A/D (Analog-to-Digital) converter 110, a demultiplexer 111, a demapper 112, a decoder 113, a scheduler 114, a notification information generator 115, a pilot generator 116, and a buffer 117.

The terminal device 200 includes an antenna unit 201, a radio receiver 202, an A/D converter 203, a GI remover 204, an FFT (Fast Fourier Transform) unit 205, a demultiplexer 206, a demapper 207, a decoder 208, a channel quality measuring unit 209, a report information generator 210, an encoder 211, a mapper 212, a multiplexer 213, a D/A converter 214, a radio transmitter 215, and a demodulation controller 216.

Hereinafter, a process of the base station device 100 transmitting signals and then the terminal device 200 receiving the transmitted signals is explained with reference to FIGS. 1 and 2.
In the base station device 100, the encoder 101 performs error correction coding and modulation on input transmission data based on modulation parameter information and scheduling information that are indicated by the scheduler 114 to generate data symbol strings of the transmission data. The mapper 102 allocates the data symbol strings to subcarriers based on the modulation parameter information and the scheduling information that are indicated by the scheduler 114. The multiplexer 103 multiplexes the mapped data symbol strings, a notification information symbol string generated by the notification information generator 115, and a pilot symbol string generated by the pilot generator 116. The IFFT unit 104 performs IFFT on the symbol strings allocated to the respective subcarriers to convert the symbol strings into a time domain signal to be output to the GI inserter 105. The GI inserter 105 adds a guard interval GI to the signal generated by the IFFT unit 104. The D/A converter 106 converts the signal to which the guard interval GI has been added into an analog signal. The radio transmitter 107 upconverts the analog signal to be transmitted to the terminal device 200 through the antenna unit 108.

In the terminal device 200, the radio receiver 202 receives the signal transmitted from the base station device 100 through the antenna unit 201. The A/D converter 203 converts the analog signal received and downconverted by the radio receiver 202 into a digital signal. The GI remover 204 removes the guard interval GI from the digital signal and outputs the signal from which the guard interval GI has been removed to the FFT unit 205. The FFT unit 205 performs FFT to convert the signal output from the GI remover 204 into frequency domain symbol strings. The demultiplexer 206 extracts a pilot symbol string, a notification information symbol string, and data symbol strings from the symbol strings output from the FFT unit 205. Then, the demultiplexer 206 outputs the pilot symbol string, the notification information symbol string, and the data symbol strings to the channel quality measuring unit 209, the demodulation controller 216, and the demapper 207, respectively. The demodulation controller 216 demodulates the notification information symbol string to obtain notification information, and outputs scheduling information (information concerning the channels allocated to the transmission data addressed to the terminal device 200) and modulation parameter information which are extracted from the notification information to the demapper 207 and the decoder 208. The demapper 207 demodulates the data symbol strings output from the demultiplexer 206 based on the scheduling information and the modulation parameter information which are received from the demodulation controller 216. Based on the scheduling information and the modulation parameter information which are received from the demodulation controller 216, the decoder 208 decodes an error correction code of data obtained from the data symbol strings being demodulated and extracts reception data.

Hereinafter, a process of the terminal device 200 feeding back report information to the base station device 100 is explained with reference to FIGS. 1 and 2.
The channel quality measuring unit 209 measures channel quality of each channel using the pilot symbol string received from the demultiplexer 206, and outputs the channel quality measurement results to the report information generator 210. Although the case where channel qualities are measured using a pilot symbol string is explained, the present invention is applicable to channel quality measurement using a data symbol string or determination results of reception data, as a matter of course. The report information generator 210 selects request channels that are candidates to be allocated based on the channel quality measurement results received from the channel quality measuring unit 209. Based on the request channels, the report information generator 210 generates report information (information concerning an additional channel and channel quality thereof) to be fed back to the base station 100. Then, the report information generator 210 modulates the report information to generate a report information symbol string. The report information generator 210 will be explained in detail later. The multiplexer 213 multiplexes the report information symbol string generated by the report information generator 210 and the data symbol strings generated by the encoder 211 and the mapper 212 performing error correction coding and modulation on transmission data to generate a signal to be transmitted to the base station device 100, and outputs the generated signal to the D/A converter 214. The D/A converter 214 coverts the signal received from the multiplexer 213 into an analog signal. The radio transmitter 215 upconverts the analog signal to be transmitted to the base station 100 through the antenna unit 201.

In the base station 100, the radio receiver 109 receives the signal transmitted from the terminal device 200 through the antenna unit 108. After the radio receiver 109 downconverts the received analog signal, the A/D converter 110 converts the analog signal into a digital signal and outputs the digital signal to the demultiplexer 111. The demultiplexer 111 demultiplexes the report information symbol string and the data symbol strings from the digital signal (symbol string) received from the A/D converter 110. Then, the demultiplexer 111 outputs the report information symbol string and the data symbol strings to the buffer 117 and the demapper 112, respectively. The demapper 112 and the decoder 113 demodulates and decodes the data symbol strings demultiplexed by the demuliplexer 111 to extract reception data. Based on the report information previously reported by the terminal device 200, the buffer 117 stores channel information concerning multiple request channels (channels that are candidates to be allocated) and channel quality information concerning the request channels, which are correlated with order information indicative of the order in which the request channels have been added. Upon receiving a report information symbol string from the demultiplexer 111, the buffer 117 updates the stored information concerning multiple request channels, the channel qualities thereof, and the order thereof based on report information obtained by the report information symbol string being demodulated. The detailed operations performed by the buffer 117 will be explained later together with operations performed by the report information generator 210 included in the terminal device 200.

After updating the stored information concerning the multiple request channels, the channel qualities thereof, and the order thereof, the buffer 117 outputs the updated information concerning the multiple request channels and the channel qualities thereof to the scheduler 114. If the base station device 100 is in communication with multiple terminal devices 200, the buffer 117 stores, for each terminal device 200, information concerning multiple request channels, channel qualities thereof, and the order thereof, and outputs the information concerning the request channels and the channel qualities thereof for each terminal device 200 to the scheduler 114. The scheduler 114 determines channels to which transmission data addressed to each terminal device 200 is to be allocated based on the information concerning the request channels and the channel qualities thereof which are received from the buffer 117, and performs scheduling for determining modulation parameters for the respective transmission data. After the scheduling, the scheduler 114 outputs scheduling information (information indicative of a relationship between each channel and a corresponding terminal device) and modulation parameter information to the encoder 101, the mapper 102, and the notification information generator 115. The notification information generator 115 generates a notification information symbol string for indicating the scheduling information and the modulation parameter information which are received from the scheduler 114, and outputs the generated notification information symbol string to the multiplexer 103.
Then, similar operations as explained above follow until transmission.

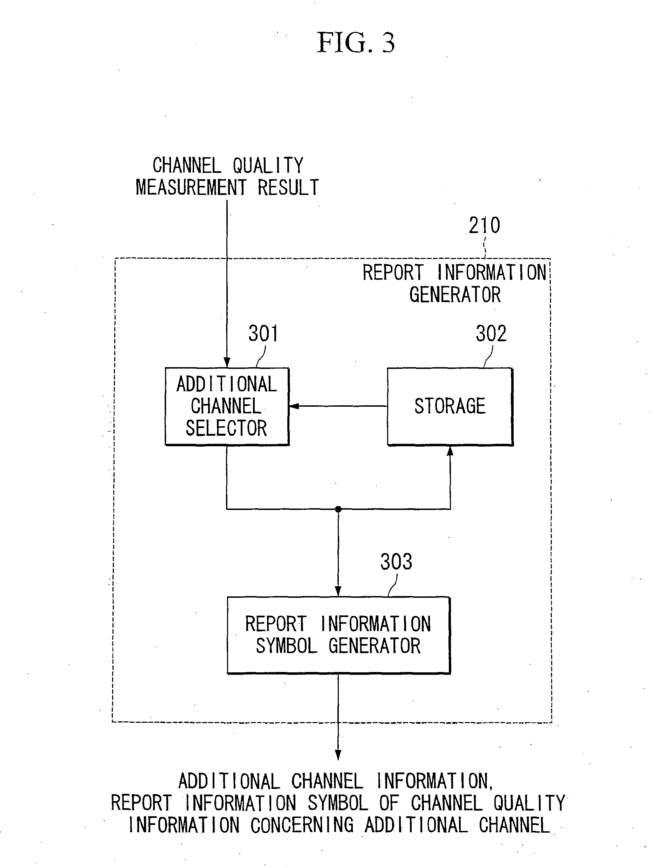

FIG. 3 is a schematic block diagram illustrating the inner configuration of the report information generator 210. Hereinafter, operations performed by the report information generator 210 are explained in more detail with reference to FIG. 3. It is assumed that the numbers of all channels, request channels, and additional channels are N, M, and K, respectively, which are integers such that N>M>K≥1. The channel quality measuring unit 209 outputs the channel quality measurement results of respective channels to the additional channel selector 301. The storage 302 stores channel information concerning the newest (M-K) request channels in ascending order of order information (hereinafter, "request continuation channels") among previously updated M request channels, and order information concerning the order of the request continuation channels. The storage 302 outputs the information concerning the (M-K) request-continuation channels to the additional channel selector 301.

The additional selector 301 selects K additional channels to be newly added as the request channels from (N-M+K) channels that are not included in the request continuation channels based on the channel quality measurement results, and generates channel quality information concerning the K additional channels. The additional channel selector 301 outputs information concerning the K additional channels to the storage 302. Additionally, the additional channel selector 301 outputs information concerning the K additional channels and channel qualities thereof to the report information symbol generator 303. The additional channel selector 301 may generate information concerning channel quality of each channel based on the channel quality measurement results and select additional channels based on the generated channel quality information.

The storage 302 deletes information concerning the oldest K request continuation channels based on the stored information concerning the order of the previously updated (M-K) request continuation channels. Additionally, the storage 302 assigns currently newest order information to the additional channel information input from the additional channel selector 301. Then, the storage 302 adds the new K additional channels to the request continuation channels that have not been deleted, and stores information concerning new (M-K) request continuation channels and channel qualities thereof. On the other hand, the report information symbol generator 303 generates and outputs a report information symbol string for reporting to the base station 100 the information concerning the additional channels and the channel qualities thereof which is transmitted from the additional channel selector 301.

The buffer 117 included in the base station 100 stores information concerning M request channels, channel qualities thereof, and the order thereof. Upon receiving new report information concerning K additional channels from the terminal device 200, the buffer 117 receives a report information symbol string of the report information from the demultiplexer 111. Then, the buffer 117 deletes information concerning the oldest K channels, the channel qualities thereof, and the order thereof based on the stored information concerning the order of the M request channels. Then, the buffer 117 assigns newest order information to the information concerning the K additional channels and the channel qualities thereof which is extracted from the report information symbol string, and stores the resultant information.

Hereinafter, operations performed by the report information generator 210 are explained with specific examples.

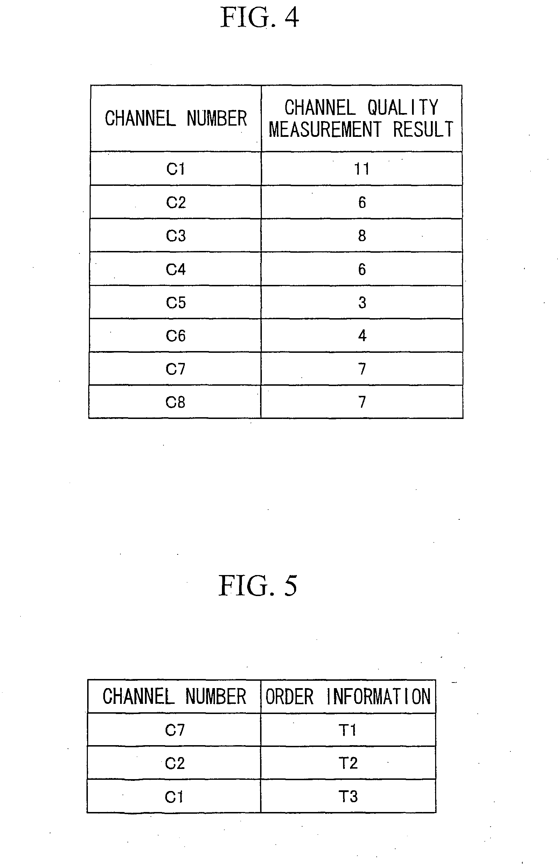

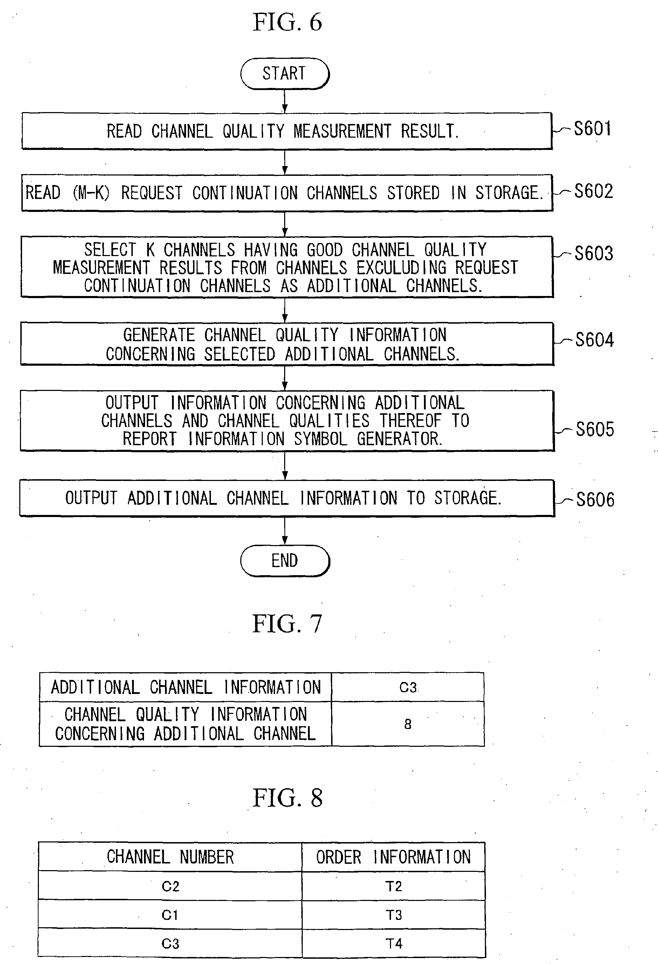

FIG. 4 illustrates an example of channel quality measurement results indicated by the channel quality measuring unit 209. FIG. 5 illustrates an example of information concerning (M-K) request continuation channels and the order thereof which is stored in the storage 302. FIG. 6 illustrates a flowchart of operations performed by the additional channel selector 301. In FIGS. 4 and 5, the numbers of all channels, request channels, and additional channels are N=8, M=4, and K=1, respectively. Additionally, channel numbers (C1 to C8) are used as channel information. Further, the order information shown in FIG. 5 indicates that T1 is the oldest, and T2 and T3 are newer in this order.

The additional channel selector 301 reads channel quality measurement results shown in FIG. 4 (combinations of channel information and channel quality measurement results which are "C1, 11", "C2, 6", "C3, 8", "C4, 6", "C5, 3", "C6, 4", "C7, 7", and "C8, 7" in this case) (step S601). Additionally, the additional channel selector 301 reads information concerning (M-K) request continuation channels (3 request continuation channels in this case) and the order thereof which is shown in FIG. 5 ("C7, T1", "C2, T2", and "C1, T3" in this case) from the storage 302 (step S602). Then, the additional channel selector 301 selects K channels (1 channel in this case) having good channel qualities (channel C3 in the case of FIG. 4) from channels excluding the request continuation channels (channels C1, C2, and C7 in the case of FIG. 5) as additional channels (step S603).

Then, the additional channel selector 301 extracts channel quality measurement results of the selected additional channels from the channel quality measurement results, and generates channel quality information based on the channel quality measurement results ("8" of the channel C3) (step S604). The additional channel selector 301 outputs the additional channel information (the channel number C3 in this case) and the generated channel quality information ("8" in this case) to the report information symbol generator 303 (step S605). Then, the additional channel selector 301 outputs the additional channel information to the storage 302 (step S606). As a result, information output from the additional channel selector 301 to the report information symbol generator 303 is additional channel information "C3" and channel quality information "8" concerning the addition channel "C3", as shown in FIG. 7.

Upon receiving the additional channel information (the channel number "C3" in this case) from the additional channel selector 301, the storage 302 assigns newest order information to the additional channel information, and stores the new additional channels in place of the oldest K request continuation channels among the (M-K) request continuation channels (since K=1 in this case, "T4" which is newer than "T3" is assigned to the additional channel information C3 as order information, and the channel information C3 is stored in place of the oldest channel information C7). As a result, the request continuation-channel information which is stored in the storage 302 and shown in FIG. 5 is updated to information shown in FIG. 8 (combinations of channel information and order information which are "C2, T2", "C1, T3", and "C3, T4").

As explained above, according to the first embodiment, the terminal device 200 reports only additional channel information as channel information when the terminal device 200 selects some channels and reports information concerning channel qualities of the selected channels to the base station device 100. Therefore, the amount of report information can be reduced compared with the case where information concerning all of the selected channels is reported, and overhead caused by feedback can be reduced. Further, upon reporting information concerning channel qualities of the selected channels, the terminal device 200 reports only information concerning channel qualities of the additional channels. Therefore, the amount of report information can be reduced compared with the case where information concerning all of the selected channels is reported, and overhead caused by feedback can be reduced.

### [Second Embodiment]

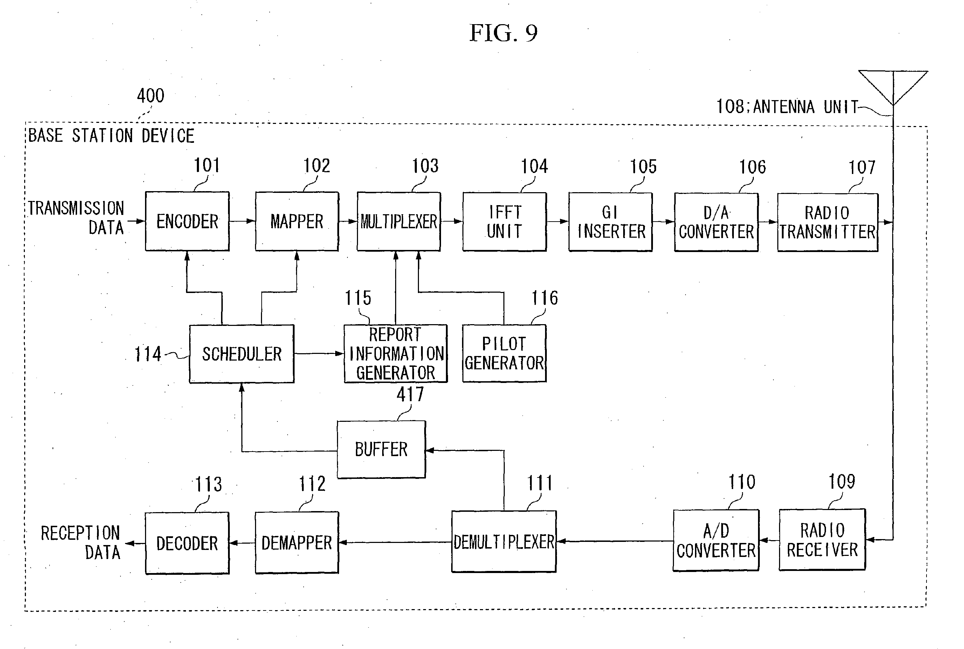

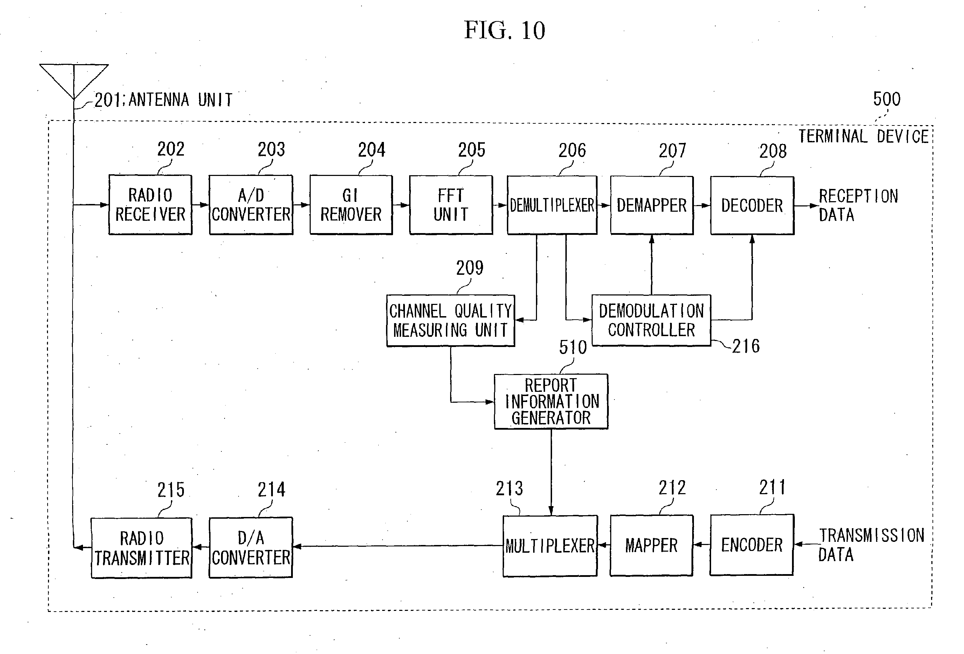

FIG. 9 is a schematic block diagram illustrating the configuration of a base station device 400. FIG. 10 is a schematic block diagram illustrating the configuration of a terminal device 500.
The case where information concerning additional channels and channel qualities thereof is reported from the terminal device 200 to the base station device 100 has been explained in the first embodiment. The terminal device 500 of the second embodiment reports information concerning channel qualities of request continuation channels as well as information concerning additional channels and channel qualities thereof. In the functional blocks of the base station 400 and the terminal device 500, a report information generator 510 corresponding to the report information generator 210 included in the terminal device 200 and a buffer 417 corresponding to the buffer 117 included in the base station 100 differ from those of the first embodiment. The details of the report information generator 510 and the buffer 417 will be explained later. Other configurations are similar to those of the first embodiment (FIGS. 1 and 2), and therefore explanations thereof are omitted.

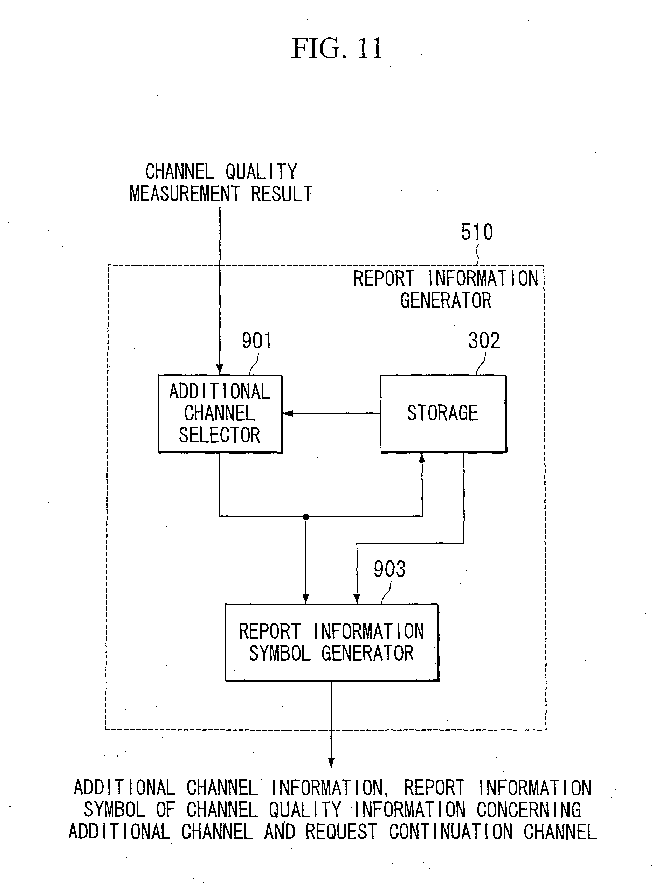

FIG. 11 is a schematic block diagram illustrating the configuration of the report information generator 510 of the second embodiment. Operations performed by the report information generator 510 are explained with reference to FIG. 11. Similar to the first embodiment, it is assumed that the numbers of all channels, request channels, and additional channels are N, M, and K, respectively. Similar to the first embodiment, the channel quality measuring unit 209 outputs the channel quality measurement results to an additional channel selector 901. The storage 302 stores channel information concerning the newest (M-K) request continuation channels in ascending order of the order information among previously updated M request channels, and order information concerning the (M-K) request continuation channels. The storage 302 outputs the information concerning the (M-K) request continuation channels to the additional channel selector 901.

The additional selector 901 selects K additional channels to be newly added as request channels from (N-M+K) channels that are not included in the (M-K) request continuation channels based on the channel quality measurement results, and generates channel quality information concerning the K additional channels and the (M-K) request continuation channels, i.e., the total number of M channels. The additional channel selector 901 outputs information concerning the selected K additional channels to the storage 302. Additionally, the additional channel selector 901 outputs information concerning the K additional channels and channel qualities thereof, and channel qualities of the (M-K) request continuation channels to the report information symbol generator 903. The additional channel selector 901 may generate information concerning channel quality of each channel based on the channel quality measurement results, and select additional channels based on the generated channel quality information.

The storage 302 deletes information concerning the oldest K request continuation channels based on the stored order information concerning the previously updated (M-K) request continuation channels. Additionally, the storage 302 assigns currently newest order information to the additional channel information input from the additional channel selector 901. Then, the storage 302 adds the new K additional channels to the request continuation channels that have not been deleted, and stores information concerning new (M-K) request continuation channels and the order thereof.

The report information symbol generator 903 generates a report information symbol string of report information which is to be transmitted to the base station 400 and concerning the additional channels and the channel qualities thereof, and channel qualities of the (M-K) request continuation channels which is transmitted from the additional channel selector 901, and outputs the generated report information symbol string. Although channel information concerning the (M-K) request continuation channels needs not to be reported, channel qualities thereof are preferably sorted in order preliminarily determined between the base station device 400 and the terminal device 500, such as the order of order information according to the new and the old, or the order of channel information (channel number), to generate report information. However, another order can be used. On the other hand, channel information concerning the K additional channels is reported, and therefore the channel information is preferably correlated to channel quality information to generate the report information. However, another configuration may be used.

Hereinafter, operations performed by the buffer 417 included in the base station 400 shown in FIG. 9 are explained.
The buffer 417 stores information concerning M request channels, channel qualities thereof, and the order thereof. Upon receiving new report information concerning K additional channels from the terminal device 500, the buffer 417 receives a report information symbol string of the report information from the demultiplexer 111. Then, the buffer 417 deletes information concerning the oldest K channels, the channel qualities thereof, and the order thereof based on the stored order information concerning the M request channels. Then, the buffer 117 assigns newest order information to the information concerning the K additional channels and the channel qualities thereof, and stores the resultant information. Further, the buffer 417 updates the stored channel quality information concerning the remaining (M-K) request continuation channels based on the report information.

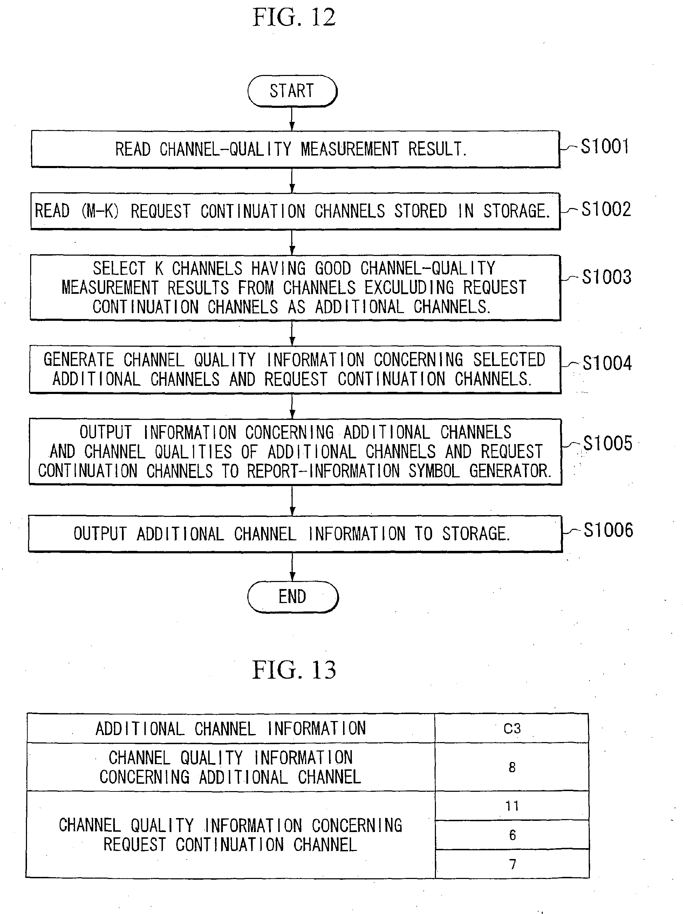

FIG. 12 illustrates a flowchart of operations performed by the additional channel selector 901. Similar to the specific example of the first embodiment, it is assumed that the numbers of all channels, request channels, and additional channels are N=8, M=4, and K=1, respectively. The case where information shown in FIG. 4 is input as an example of channel quality measurement results to be output from the channel quality measuring unit 209 of the terminal device 500 to the additional channel selector 901, and information shown in FIG. 5 is input to the additional channel selector 901 as an example of the (M-K) request continuation channels stored in the storage 302 and the corresponding order information is explained. The flowchart of the operations performed by the additional channel selector 901 shown in FIG. 12 is similar to that of the operations performed by the additional channel selector 301 shown in FIG. 6 with respect to basic operations. The difference is that channel quality information concerning (M-K) request continuation channels is also generated in step S1004 (corresponding to S604 shown in FIG. 6) and output to the report information symbol generator in step S1005 (corresponding to step S605 shown in FIG. 6).

The additional channel selector 901 reads channel quality measurement results shown in FIG. 4 (combinations of channel information and channel quality measurement results which are "C1, 11", "C2, 6", "C3, 8", "C4, 6", "C5, 3", "C6, 4", "C7, 7", and "C8, 7" in this case) (step S1001). Additionally, the additional channel selector 901 reads information concerning (M-K) request continuation channels (3 request continuation channels in this case) and the order thereof which is shown in FIG. 5 ("C7, T1", "C2, T2", and "C1, T3" in this case) from the storage 302 (step S1002). Then, the additional channel selector 901 selects K channels (1 channel in this case) having good channel qualities (channel C3 in the case of FIG. 4) from channels excluding the request continuation channels (channels C1, C2, and C7 in the case of FIG. 5) as additional channels (step S1003).

Then, the additional channel selector 901 extracts channel quality measurement results of the selected additional channels and the request continuation channels (the channel C1, C2, and C7) from the channel quality measurement results, and generates channel quality information based on the extracted channel quality measurement results ("8" of the channel C3, and "11", "6", and "7" of the channels C1, C2, and C7 in this case) (step S1004). The additional channel selector 901 outputs the additional channel information (the channel number C3 in this case) and the generated channel quality information ("8" of the channel C1, and "11", "6", and "7" of the channels C1, C2, and C7 in this case) to the report information symbol generator 903 (step S1005). Then, the additional channel selector 901 outputs the additional channel information to the storage 302 (step S1006).

As a result, information output from the additional channel selector 901 to the report information symbol generator 903 is additional channel information "C3", channel quality information concerning the addition channel "8", and channel quality information concerning the request continuation channels "11, 6, and 7", as shown in FIG. 13. FIG. 13 illustrates the case where channel qualities of request continuation channels are sorted in order of channel information (the channel number) to generate report information.

Upon receiving the additional channel information "C3" from the additional channel selector 901, the storage 302 assigns newest order information "T4" (which is newer than "T3 ") to the additional channel information, and stores the new additional channel in place of the oldest request K (1 in this case) continuation channel "C7". As a result, the information concerning request continuation channels which is stored in the storage 302 and shown in FIG. 5 is updated to information shown in FIG. 8 (combinations of channel information and order information which are "C2, T2", "C1, T3", and "C3, T4").

As explained above, according to the second embodiment, the terminal device 500 reports only additional channel information as channel information when the terminal device 500 selects some channels and reports information concerning channel qualities of the selected channels to the base station device 400. Therefore, the amount of report information can be reduced compared with the case where information concerning all of the selected channels is reported, and overhead caused by feedback can be reduced. Further, the terminal device 500 reports channel quality information concerning all of the request channels upon reporting information concerning channel qualities of the request channels. As a result, the terminal device 500 continuously reports channel quality information a given number of times (M/K times if the number of request channels M is an integral multiple of the number of additional channels K, for example). Thereby, the base station 400 can obtain information concerning degree or rate of time variation in channel quality in the terminal device 500 based on report information upon receiving the report information. Therefore, the scheduler 114 can perform scheduling based on the degree or rate of time variation in channel quality.
Alternatively, the previously updated channel qualities of respective request continuation channels may be also stored in the storage 302 so that a difference value between channel qualities of request continuation channels and the previous channel qualities thereof is reported. Thereby, the amount of report information can further be reduced.

The encoder 101, the mapper 102, the multiplexer 102, the IFFT unit 104, the GI inserter 105, the demultiplexer 111, the demapper 112, the decoder 113, the scheduler 114, the notification information generator 115, the pilot generator 116, and the buffer 117 which are shown in FIG. 1, the GI remover 204, the FFT unit 205, the demultiplexer 206, the demapper 207, the decoder 208, the channel quality measuring unit 209, the report information generator 210, the encoder 211, the mapper 212, the multiplexer 213, and the demodulation controller 216 which are shown in FIG. 2, the additional channel selector 301, the storage 302, and the report information symbol generator 303 which are shown in FIG. 3, and the additional channel selector 901, the storage 302, and the report information symbol generator 903 which are shown in FIG. 11 may be implemented by dedicated hardware. Additionally, these functional blocks may include memory and CPU (central processing unit), and functions thereof may be implemented by the CPU executing programs for implementing these functions.

Although embodiments of the present invention have been explained with reference to the drawings, the specific configuration is not limited thereto, and various modifications can be made without departing from the scope of the present invention.

### INDUSTRIAL APPLICABILITY

The present invention is preferably used for, but not limited to, a cellular phone system for communication using channels allocated from multiple channels by a transmitter, such as OFDMA.

## Claims

1. A wireless communication device that receives signals using a channel allocated from N channels to the wireless communication device by another wireless communication device, comprising:
a storage that stores information concerning at least newest (M-K) request channels among M request channels that are candidates to be allocated;
an additional channel selector that selects K additional channels to be newly added to request channels from the N channels excluding the (M-K) request channels, selects at least newest (M-K) request channels from the request channels including the (M-K) request channels stored and the K additional channels selected, and stores information indicative of the (M-K) request channels selected in the storage; and
a report information generator that generates report information that is to be reported to the other wireless communication device and includes information indicative of the K additional channels selected by the additional channel selector.

2. The wireless communication device according to claim 1, comprising
a channel quality measuring unit that measures channel qualities of the N channels based on reception signals from the other wireless communication device, wherein
the additional channel selector selects the K additional channels based on the channel qualities.

3. The wireless communication device according to claim 1, wherein the report information generator generates report information including information indicative of channel qualities of the K additional channels in addition to the information indicative of the K additional channels.

4. The wireless communication device according to claim 2, wherein:
the additional channel selector selects K additional channels from the N channels excluding the (M-K) request channels stored in the storage, selects, from the channel qualities, channel qualities of M request channels including the (M-K) request channels stored and the K additional channels selected, selects at least newest (M-K) request channels from the M request channels, and stores information indicative of the (M-K) request channels selected in the storage; and
the report information generator generates report information including information indicative of the channel qualities of the M request channels selected by the additional channel selector.

5. A wireless communication device that receives signals using a channel allocated from N channels to the wireless communication device by another wireless communication device, comprising:
a demultiplexer that demultiplexes, from a reception signal received from the other wireless communication device, report information including information indicative of K additional channels to be newly added to request channels that are candidates to be allocated;
a buffer that extracts the information indicative of the K additional channels from the report information demultiplexed, selects newest M request channels from channels including the K additional channels indicated by the information extracted and M request channels indicated by information stored in the buffer, and stores the M request channels selected in the buffer; and
a scheduler that schedules channels to be allocated to the other wireless communication device based on the M request channels selected by the buffer.

6. The wireless communication device according to claim 5, wherein:
the report information comprises information indicative of the K additional channels and channel qualities thereof;
the buffer stores information indicative of the M request channels and channel qualities thereof;
the buffer selects newest M request channels from channels including the K additional channels extracted from the report information and the M request channels indicated by the information stored in the buffer, stores the M request channels selected in the buffer, extracts information indicative of the channels qualities, selects information indicative of channel qualities of the M request channels selected from the information indicative of the channel qualities extracted and the information indicative of the channel qualities stored in the buffer, and stores the information selected in the buffer; and
the scheduler schedules channels to be allocated to the other wireless communication device based on the information indicative of the M request channels and the channel qualities thereof which are selected by the buffer.

7. The wireless communication device according to claim 5, wherein:
the report information comprises information indicative of the K additional channels and channel qualities of M request channels comprising the K additional channels;
the buffer extracts the information indicative of the channel qualities of the M request channels including the K additional channels in addition to the information indicative of the K additional channels from the report information; and
the scheduler schedules channels to be allocated to the other wireless communication device based on the information indicative of the M request channels selected by the buffer and the information concerning the channel qualities which is extracted by the buffer.

8. A wireless communication system comprising a first wireless communication device and a second wireless communication device that receives reception signals using a channel allocated from N channels by the first wireless communication device,
the second wireless communication device comprising
a storage that stores information concerning at least newest (M-K) request channels among M request channels that are candidates to be allocated;
an additional channel selector that selects K additional channels to be newly added to request channels from the N channels excluding the (M-K) request channels, selects at least newest (M-K) request channels from the request channels including the (M-K) request channels stored and the K additional channels selected, and stores information indicative of the (M-K) request channels selected in the storage; and
a report information generator that generates report information that is to be reported to the other wireless communication device and includes information indicative of the K additional channels selected by the additional channel selector, and
the first wireless communication device comprising:
a demultiplexer that demultiplexes the report information from a reception signal received from the second wireless communication device;
a buffer that extracts the information indicative of the K additional channels from the report information demultiplexed, selects newest M request channels from channels including the K additional channels indicated by the information extracted and M request channels indicated by information stored in the buffer, and stores the M request channels selected in the buffer; and
a scheduler that schedules channels to be allocated to the second wireless communication device based on the M request channels selected by the buffer.

9. A wireless communication method for a wireless communication system comprising a first wireless communication device and a second wireless communication device that receives reception signals using a channel allocated from N channels by the first wireless communication device, the wireless communication method comprising:
a first step of the second wireless communication device selecting K additional channels to be newly added to request channels from the N channels excluding newest (M-K) request channels among previous M request channels that are candidates to be allocated;
a second step of the second wireless communication device generating report information including information indicative of the K additional channels selected in the first step;
a third step of the second wireless communication device transmitting the report information generated in the second step to the first wireless communication device;
a fourth step of the first wireless communication device receiving the report information transmitted in the fourth step;
a fifth step of the first wireless communication device extracting the information indicative of the K additional channels from the report information received in the fourth step, and selecting, as current request channels, newest M request channels from channels including the K additional channels indicated by the information extracted and the previous M request channels; and
a sixth step of the first wireless communication device scheduling channels to be allocated to the second wireless communication device based on the M request channels selected in the fifth step.

10. A wireless communication method for a wireless communication device that receives signals using a channel allocated from N channels to the wireless communication device by another wireless communication device, the wireless communication method comprising:
a first step of the wireless communication device selecting K additional channels to be newly added to request channels from the N channels excluding newest (M-K) request channels among previous M request channels that are candidates to be allocated;
a second step of the wireless communication device generating report information including information indicative of the K additional channels selected in the first step; and
a third step of the wireless communication device transmitting the report information generated in the second step to the other wireless communication device.

11. A wireless communication method for a wireless communication device that receives signals using a channel allocated from N channels to the wireless communication device by another wireless communication device, the wireless communication method comprising:
a first step of the wireless communication device receiving report information transmitted from the other wireless communication device;
a second step of the wireless communication device extracting information indicative of K additional channels from the report information received in the first step, and selecting, as current request channels, newest M request channels from channels including the K additional channels indicated by the information extracted and previous M request channels; and
a third step of the wireless communication device scheduling channels to be allocated to the other wireless communication device based on the M request channels selected in the second step.
